# EUROPEAN PATENT APPLICATION

(11) **EP 2 985 416 A1**
(43) Date of publication of application: **17.02.2016**
(21) Application number: 15178982.3
(22) Date of filing: 30.07.2015
(51) Int. Cl.: F01D 5/14, F01D 5/30

(54) **COMPRESSOR BLADE WITH CHAMFERED ROOT**

(30) Priority: 01.08.2014 JP 2014157405
(71) Applicant: Mitsubishi Hitachi Power Systems, Ltd., Yokohama 220-8401 (JP)
(72) Inventor: Sekihara, Masaru, Yokohama, 220-8401 (JP); Takahashi, Yasuo, Yokohama, 220-8401 (JP)
(74) Representative: Beetz & Partner mbB

(57) **Abstract**

An axial flow compressor comprising: a rotor blade and a stator blade to intake air from an atmosphere and compress the air; a wheel to secure the rotor blade; a casing to secure the stator blade; wherein a wheel dovetail slot is machined on an outer circumferential surface of the wheel at an angle with respect to the rotational axis of the axial flow compressor; and a rotor blade dovetail is machined on an inner circumferential side of the rotor blade to be fitted to the wheel dovetail slot, whereby a chamfered surface is formed on at least one of an upstream side and a downstream side of the rotor blade dovetail.

## Description

### {Technical Field}

The present invention relates to an axial flow compressor that secures a rotor blade with a wheel dovetail having a certain angle in the direction of a rotational axis, and a gas turbine equipped with the axial flow compressor, and more particularly to an axial flow compressor with a structure in which a rotor blade is secured with a wheel dovetail provided so as to have a certain angle in the direction of the rotational axis of the rotor blade and a gas turbine that includes the axial flow compressor, a combustor to mix compressed air supplied from the axial flow compressor with a fuel and burn a mixture of the compressed air with the fuel to generate a high-temperature combustion gas, and a turbine which is driven by the high-temperature combustion gas supplied from the combustor to generate a rotational power with the combustion gas supplied from the combustor.

### {Background Art}

A gas turbine comprises mainly an axial flow compressor, a combustor, and a turbine.

The axial flow compressor intakes an air from the atmosphere and adiabatically compresses the air. The combustor mixes the compressed air supplied from the axial flow compressor with a fuel, and burns a mixture of the compressed air with the fuel to generate a high-temperature combustion gas. When the combustion gas supplied from the combustor is expanded, the turbine generates a rotational power. An exhaust gas exhausted from the turbine is released to the atmosphere.

To assure high maintainability and high structure attenuation to reduce vibration stress, the rotor blade of the axial flow compressor often has a rotor blade dovetail, which fits to a groove in a dovetail formed on the outer circumferential side of the wheel, on the inner circumferential side of a rotor blade and is secured to the wheel dovetail.

In this fitting structure, attention must be paid to stress exerted on the wheel dovetail and rotor blade dovetail.

One type of damage that must be considered in the dovetail structure is fatigue damage. In a general example of fatigue damage, when excessive stress is repeatedly exerted, a fine crack is initiated from, for example, a metal surface, grows, and causes breakage.

An effective countermeasure against this damage is to reduce exerted stress. It is desirable to reduce centrifugal stress or thermal stress by, for example, changing a shape or reducing a thermal load.

To reduce stress exerted on a dovetail section, the technology described in Japanese Patent Laid-open No. 2008-69781 proposes a structure in which an undercut fillet radius, for a rotor blade dovetail, that has a multi-part profile shape is formed at an intersection of a dovetail platform and a dovetail pressure surface.

To reduce stress exerted on the rotor blade side, the technology described in Japanese Patent Laid-open No. 2008-69781 proposes a structure in which a fillet is provided on the dovetail section.

### {Citation List}

### {Patent Literature}

{Patent Literature 1} Japanese Patent Laid-open No. 2008-69781

### {Summary of Invention}

### {Technical Problem}

As the performance of axial flow compressors has been improved, rotor blade design to increase a per-stage load is becoming dominant in recent years, so stress exerted on a dovetail structure needs to be further reduced.

However, the conventional technology described in Japanese Patent Laid-open No. 2008-69781 is not intended to reduce stress exerted on a wheel dovetail, so a new dovetail structure is needed.

As the per-stage load is increased, as for an angle in a direction in which the wheel dovetail is placed, an angle with respect to the direction of a rotational axis tends to increase, and asymmetry of a load exerted from a rotor blade fitting to a groove formed in a wheel dovetail provided on the outer circumferential surface of a conical or cylindrical wheel (asymmetry between a force with which a load exerted from the rotor blade is exerted in the same forward direction as the rotational direction of the rotor blade and a force exerted on the reverse rotational direction, which is opposite to the rotational direction of the rotor blade) tends to increase for each dovetail at both the upstream side and the downstream side in the flow direction of a working fluid.

As a result, local stress exerted on the wheel dovetail becomes asymmetric between the forward direction and reverse direction of the rotational direction of the rotor blade, causing an imbalance. This is a factor that causes high stress.

An object of the present invention is to provide an axial flow compressor and a gas turbine equipped with the axial flow compressor, wherein the axial flow compressor includes rotor blade dovetails, each of which reduces high stress exerted on the rotor blade by reducing an uneven contact with the corresponding wheel dovetail so as to level a load that would otherwise become asymmetric between the forward direction and reverse direction of the rotational direction of the rotor blade.

### {Solution to Problem}

An axial flow compressor comprising: a rotor blade and a stator blade to intake air from an atmosphere and compress the air; a wheel to secure the rotor blade; a casing to secure the stator blade; wherein a wheel dovetail which is machined on an outer circumferential surface of the wheel to have a certain angle with respect to a rotational axis of the axial flow compressor; and a rotor blade dovetail which is machined on an inner circumferential side of the rotor blade to secure by being fitted to the wheel dovetail, characterized in that: a cut surface is formed on at least one of an upstream side and a downstream side of the rotor blade dovetail by cutting a part of the rotor blade dovetail in a surface form.

A gas turbine of the present invention, comprising:
an axial flow compressor configured so that the above-described axial flow compressor which is used to intake air from the atmosphere and compress the air; a combustor to mix the compressed air supplied from the axial flow compressor with a fuel, and burn a mixture of the compressed air with the fuel to generate a high-temperature combustion gas; and a turbine which is driven by the high-temperature combustion gas generated in the combustor to generate a rotational power.

### {Advantageous Effects of Invention}

According to the present invention, an axial flow compressor that includes rotor blade dovetails that reduce high stress exerted on rotor blades by reducing an uneven contact with each wheel dovetail so as to level a load that would otherwise become asymmetric between the forward direction and reverse direction of the rotational direction of the rotor blade, and a gas turbine equipped with the axial flow compressor, can be realized.

### {Brief Description of Drawings}

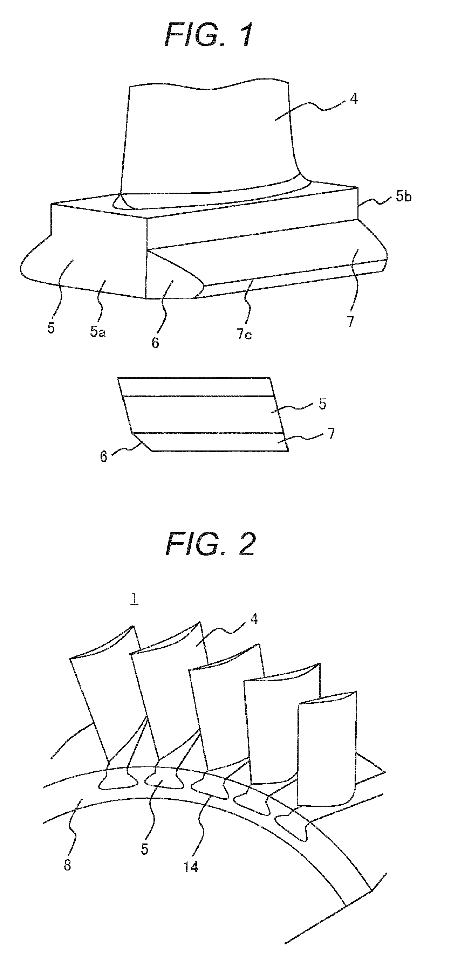

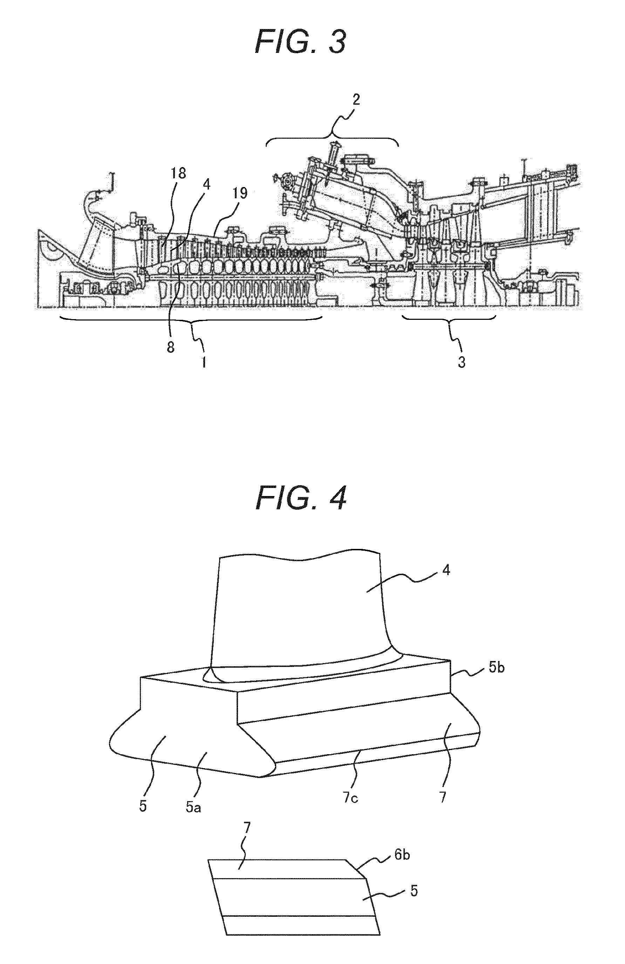

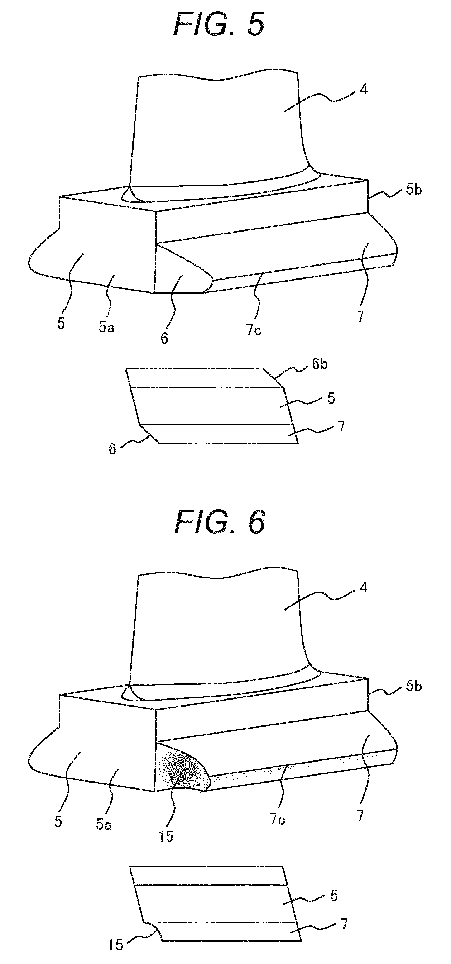

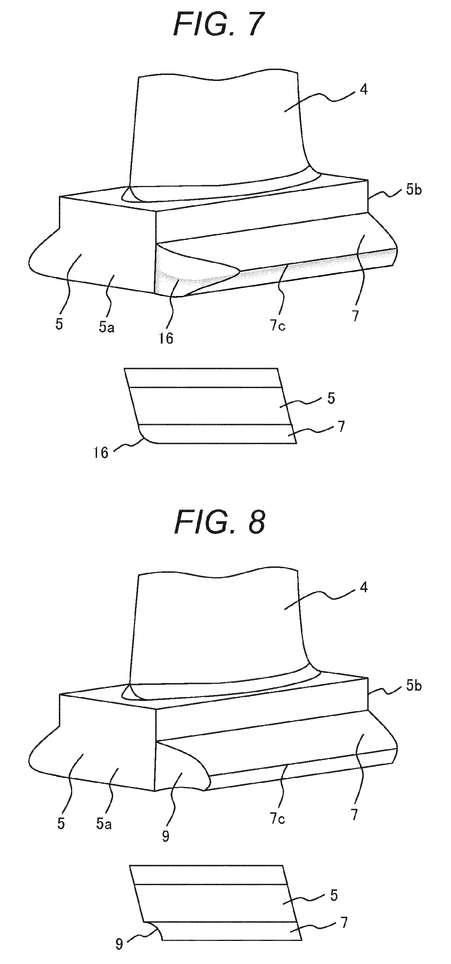

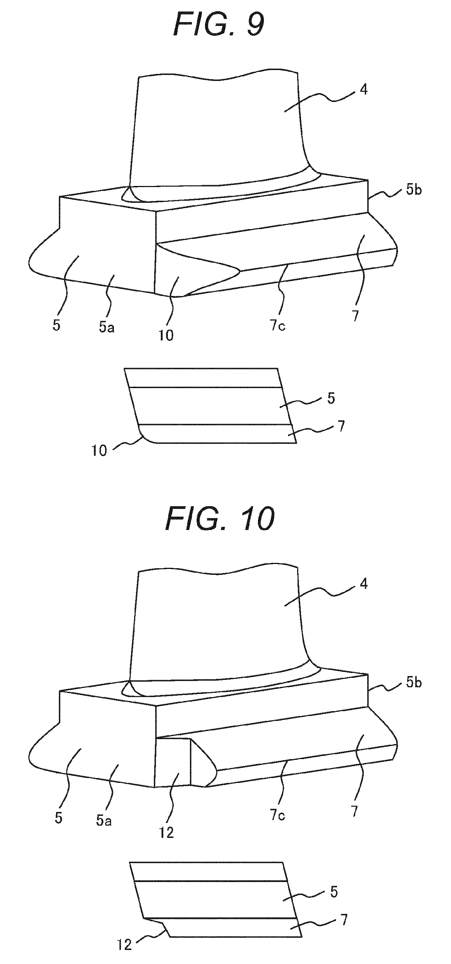

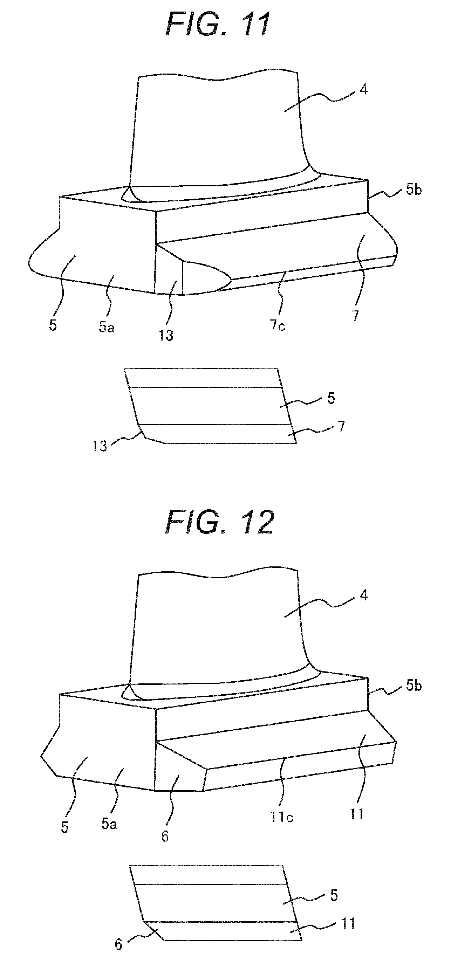

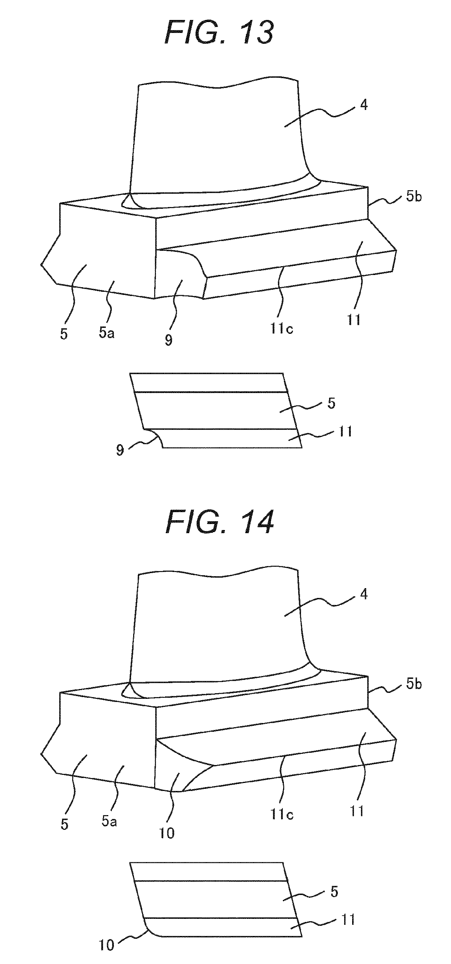

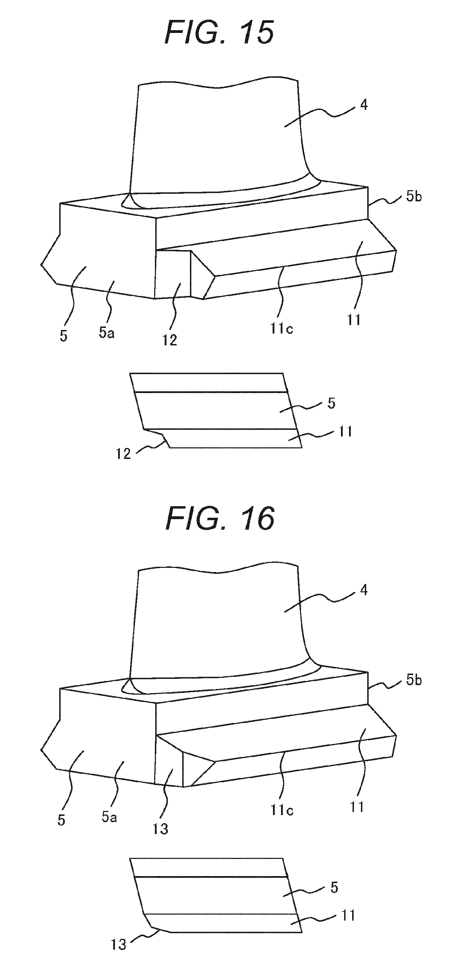

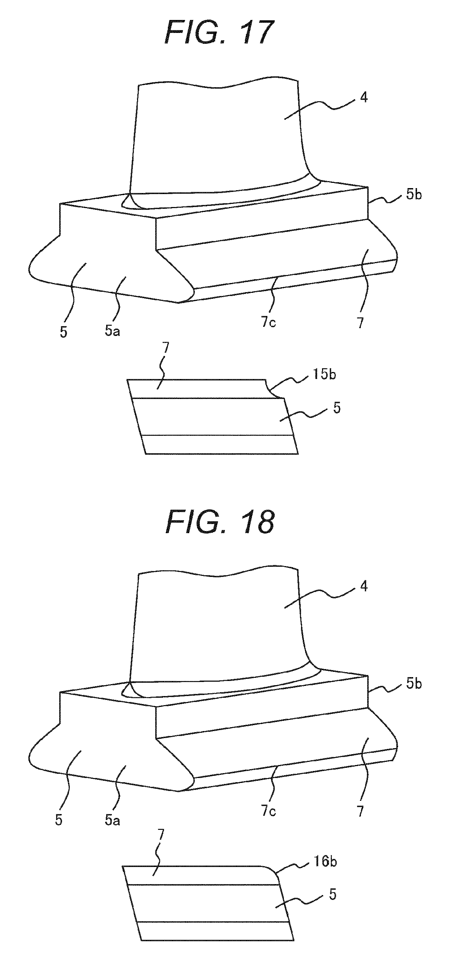

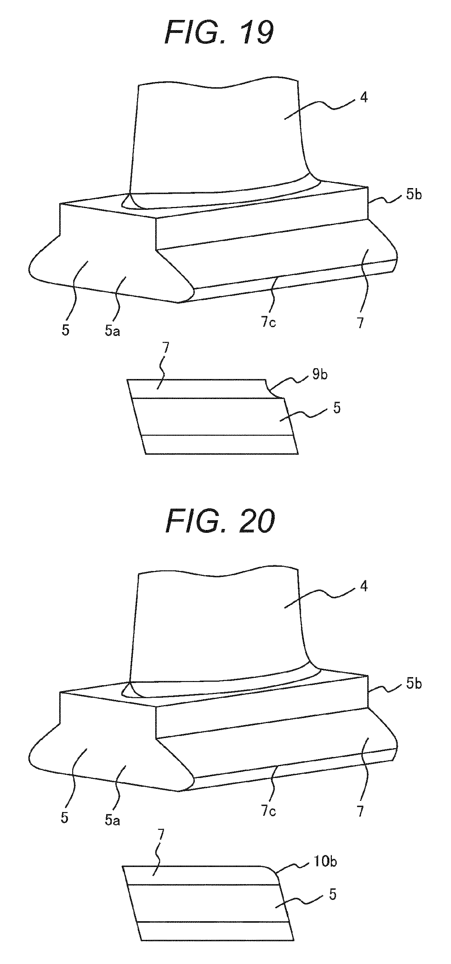

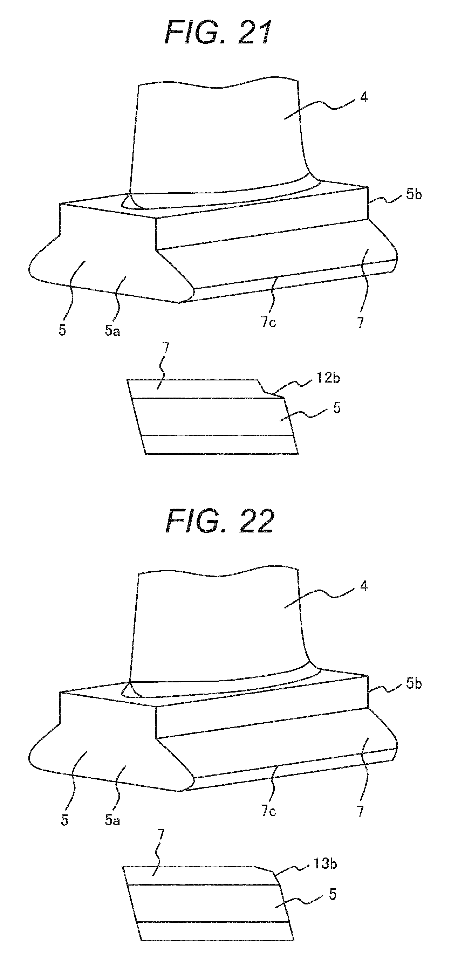

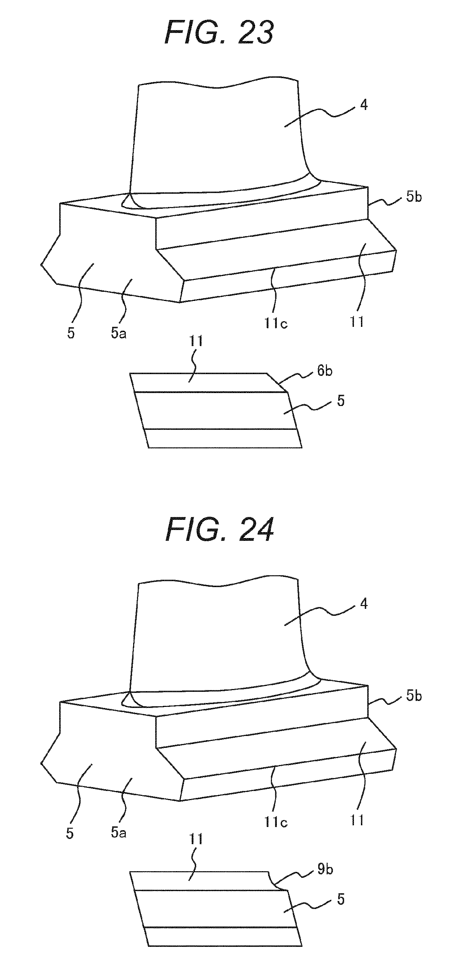

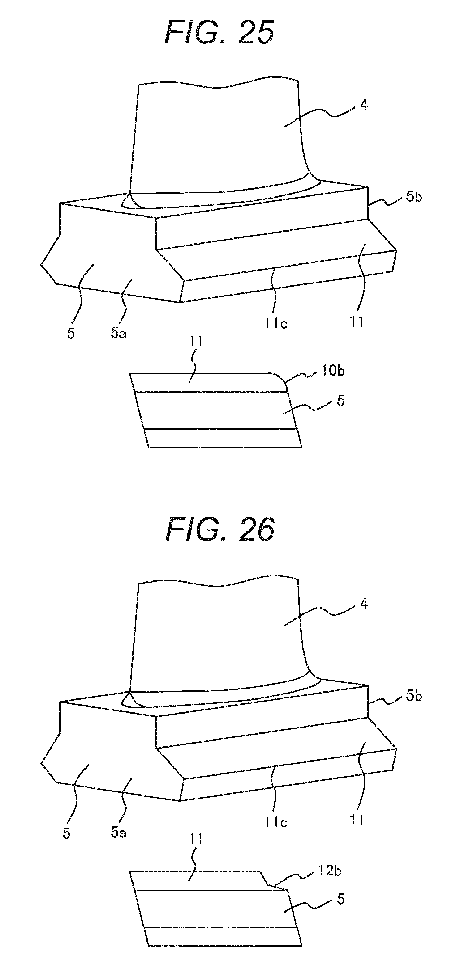

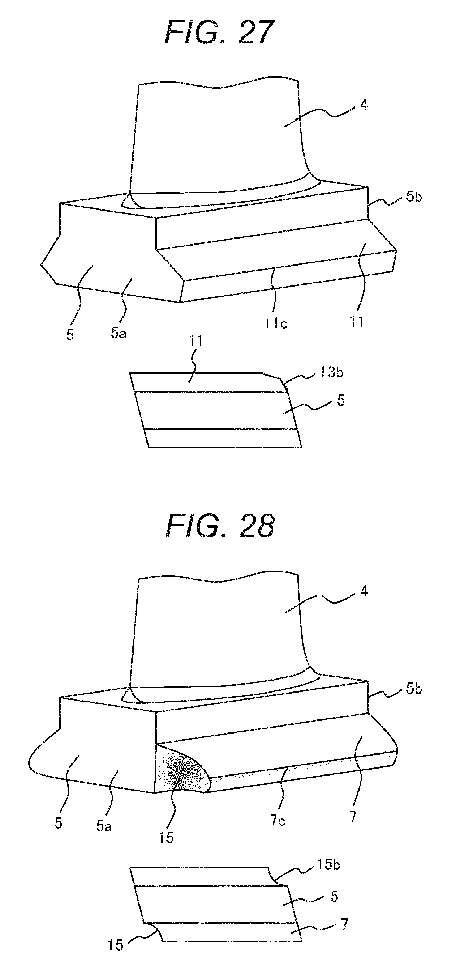

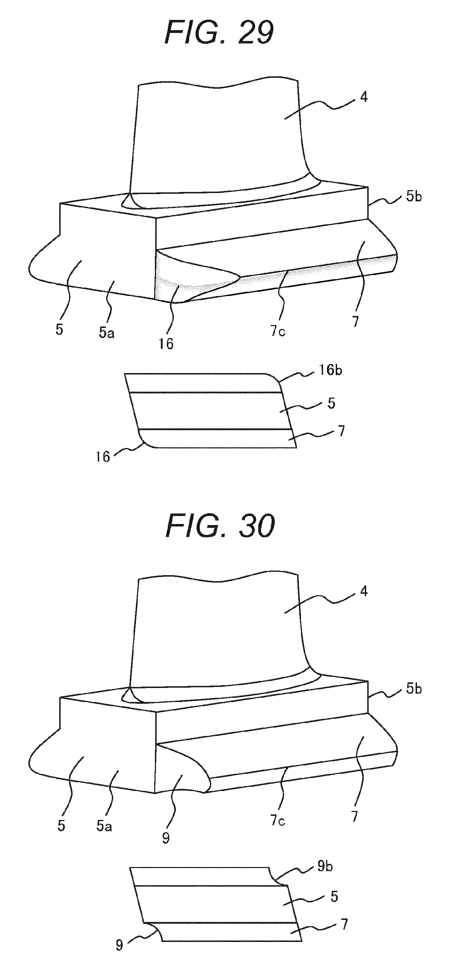

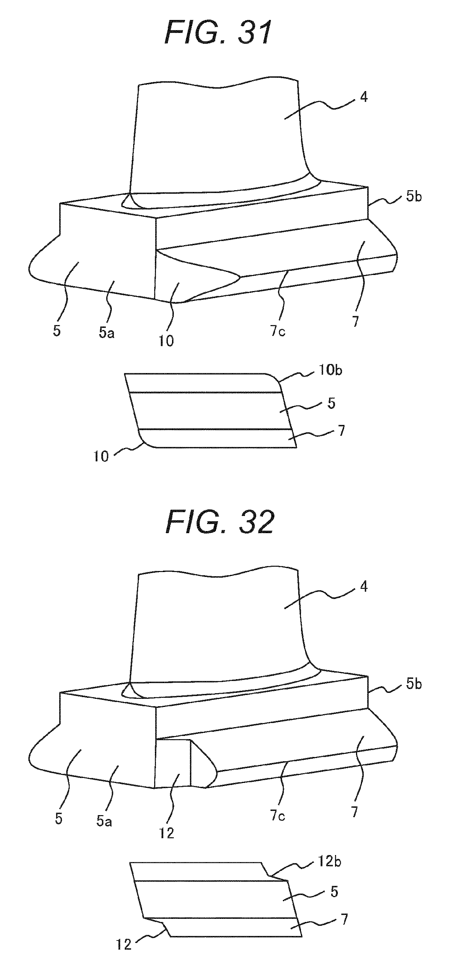

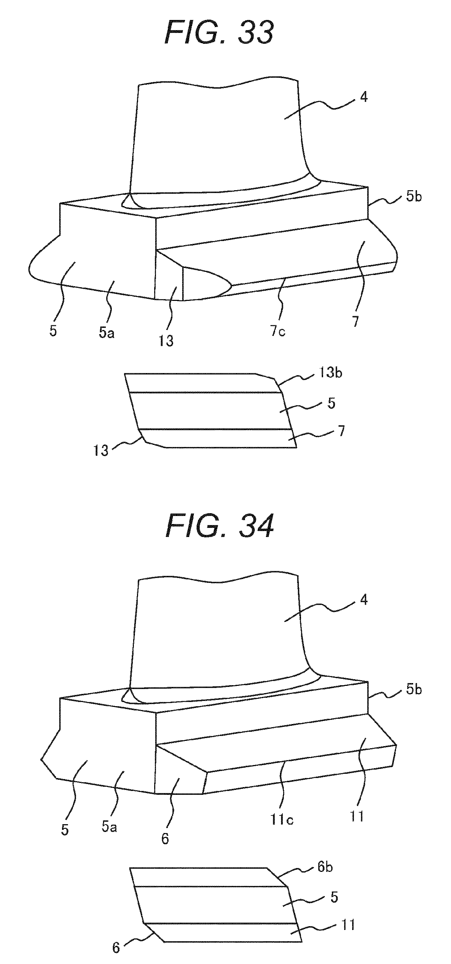

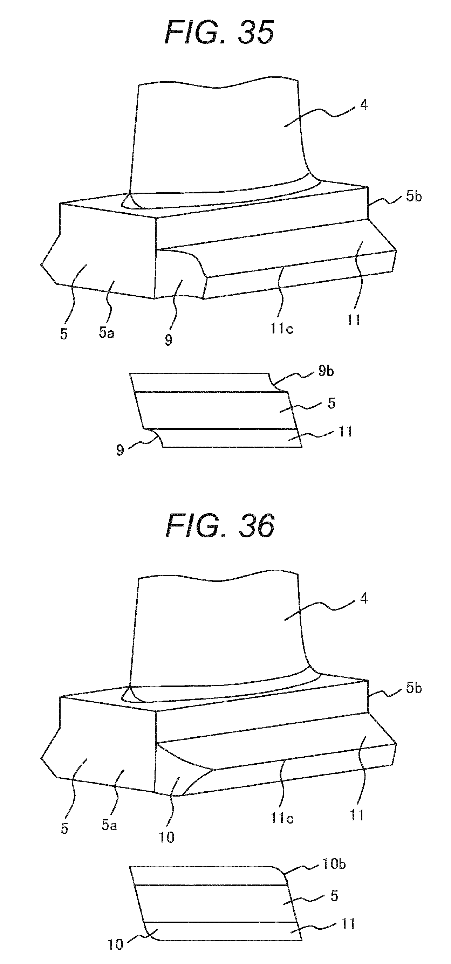

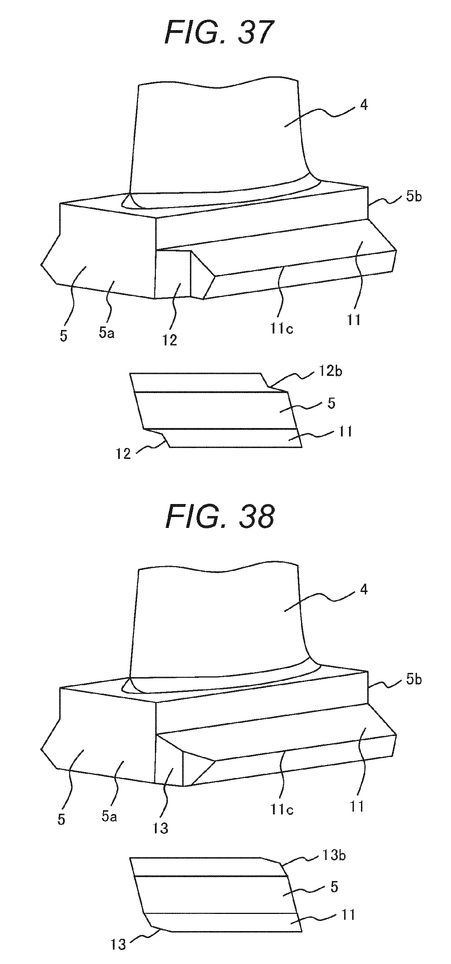

{Fig. 1} FIG. 1 partially illustrates a rotor blade dovetail that secures a rotor blade included in an axial flow compressor according to a first embodiment of the present invention; the upstream side of the inclined surface of the rotor blade dovetail, the inclined surface being a curved surface, is cut in a planar shape. The drawing at the bottom of FIG. 1 partially illustrates the rotor blade dovetail in this embodiment when viewed from above.
{Fig. 2} FIG. 2 partially illustrates the structure of the axial flow compressor according to the first embodiment of the present invention; in the structure, compressor rotor blades, each of which has the rotor blade dovetail, are incorporated into their relevant wheel dovetails of a compressor wheel.
{Fig. 3} FIG. 3 schematically illustrates the structure of a gas turbine that has the axial flow compressor, having the rotor blade dovetails, according to the first embodiment of the present invention, a combustor, and a turbine.
{Fig. 4} FIG. 4 partially illustrates a rotor blade dovetail that secures a rotor blade included in an axial flow compressor according to a second embodiment of the present invention; the downstream side of the inclined surface of the rotor blade dovetail, the inclined surface being a curved surface, is cut in a planar shape. The drawing at the bottom of FIG. 4 partially illustrates the rotor blade dovetail in this embodiment when viewed from above.
{Fig. 5} FIG. 5 partially illustrates a rotor blade dovetail that secures a rotor blade included in an axial flow compressor according to a third embodiment of the present invention; both the upstream side and the downstream side of the inclined surface of the rotor blade dovetail, the inclined surface being a curved surface, are cut in a planar shape. The drawing at the bottom of FIG. 5 partially illustrates the rotor blade dovetail in this embodiment when viewed from above.
{Fig. 6} FIG. 6 partially illustrates a rotor blade dovetail that secures a rotor blade included in an axial flow compressor according to a fourth embodiment of the present invention; the upstream side of the inclined surface of the rotor blade dovetail, the inclined surface being a curved surface, is cut in a concave shape formed with a spherical surface. The drawing at the bottom of FIG. 6 partially illustrates the rotor blade dovetail in this embodiment when viewed from above.
{Fig. 7} FIG. 7 partially illustrates a rotor blade dovetail that secures a rotor blade included in an axial flow compressor according to a fifth embodiment of the present invention; the upstream side of the inclined surface of the rotor blade dovetail, the inclined surface being a curved surface, is cut in a convex shape formed with a spherical surface. The drawing at the bottom of FIG. 7 partially illustrates the rotor blade dovetail in this embodiment when viewed from above.
{Fig. 8} FIG. 8 partially illustrates a rotor blade dovetail that secures a rotor blade included in an axial flow compressor according to a sixth embodiment of the present invention; the upstream side of the inclined surface of the rotor blade dovetail, the inclined surface being a curved surface, is cut in a concave shape formed with a curved surface. The drawing at the bottom of FIG. 8 partially illustrates the rotor blade dovetail in this embodiment when viewed from above.
{Fig. 9} FIG. 9 partially illustrates a rotor blade dovetail that secures a rotor blade included in an axial flow compressor according to a seventh embodiment of the present invention; the upstream side of the inclined surface of the rotor blade dovetail, the inclined surface being a curved surface, is cut in a convex shape formed with a curved surface. The drawing at the bottom of FIG. 9 partially illustrates the rotor blade dovetail in this embodiment when viewed from above.
{Fig. 10} FIG. 10 partially illustrates a rotor blade dovetail that secures a rotor blade included in an axial flow compressor according to an eighth embodiment of the present invention; the upstream side of the inclined surface of the rotor blade dovetail, the inclined surface being a curved surface, is cut in a concave shape consisting of a plurality of flat surfaces. The drawing at the bottom of FIG. 10 partially illustrates the rotor blade dovetail in this embodiment when viewed from above.
{Fig. 11} FIG. 11 partially illustrates a rotor blade dovetail that secures a rotor blade included in an axial flow compressor according to a ninth embodiment of the present invention; the upstream side of the inclined surface of the rotor blade dovetail, the inclined surface being a curved surface, is cut in a convex shape consisting of a plurality of flat surfaces. The drawing at the bottom of FIG. 11 partially illustrates the rotor blade dovetail in this embodiment when viewed from above.
{Fig. 12} FIG. 12 partially illustrates a rotor blade dovetail that secures a rotor blade included in an axial flow compressor according to a tenth embodiment of the present invention; the upstream side of the inclined surface of the rotor blade dovetail, the inclined surface being a flat surface, is cut in a planar shape. The drawing at the bottom of FIG. 12 partially illustrates the rotor blade dovetail in this embodiment when viewed from above.
{Fig. 13} FIG. 13 partially illustrates a rotor blade dovetail that secures a rotor blade included in an axial flow compressor according to an eleventh embodiment of the present invention; the upstream side of the inclined surface of the rotor blade dovetail, the inclined surface being a flat surface, is cut in a concave shape formed with a curved surface. The drawing at the bottom of FIG. 13 partially illustrates the rotor blade dovetail in this embodiment when viewed from above.
{Fig. 14} FIG. 14 partially illustrates a rotor blade dovetail that secures a rotor blade included in an axial flow compressor according to a twelfth embodiment of the present invention; the upstream side of the inclined surface of the rotor blade dovetail, the inclined surface being a flat surface, is cut in a convex shape formed with a curved surface. The drawing at the bottom of FIG. 14 partially illustrates the rotor blade dovetail in this embodiment when viewed from above.
{Fig. 15} FIG. 15 partially illustrates a rotor blade dovetail that secures a rotor blade included in an axial flow compressor according to a thirteenth embodiment of the present invention; the upstream side of the inclined surface of the rotor blade dovetail, the inclined surface being a flat surface, is cut in a concave shape consisting of a plurality of flat surfaces. The drawing at the bottom of FIG. 15 partially illustrates the rotor blade dovetail in this embodiment when viewed from above.
{Fig. 16} FIG. 16 partially illustrates a rotor blade dovetail that secures a rotor blade included in an axial flow compressor according to a fourteenth embodiment of the present invention; the upstream side of the inclined surface of the rotor blade dovetail, the inclined surface being a flat surface, is cut in a convex shape consisting of a plurality of flat surfaces. The drawing at the bottom of FIG. 16 partially illustrates the rotor blade dovetail in this embodiment when viewed from above.
{Fig. 17} FIG. 17 partially illustrates a rotor blade dovetail that secures a rotor blade included in an axial flow compressor according to a fifteenth embodiment of the present invention; the downstream side of the inclined surface of the rotor blade dovetail, the inclined surface being a curved surface, is cut in a concave shape formed with a spherical surface. The drawing at the bottom of FIG. 17 partially illustrates the rotor blade dovetail in this embodiment when viewed from above.
{Fig. 18} FIG. 18 partially illustrates a rotor blade dovetail that secures a rotor blade included in an axial flow compressor according to a sixteenth embodiment of the present invention; the downstream side of the inclined surface of the rotor blade dovetail, the inclined surface being a curved surface, is cut in a convex shape formed with a spherical surface. The drawing at the bottom of FIG. 18 partially illustrates the rotor blade dovetail in this embodiment when viewed from above.
{Fig. 19} FIG. 19 partially illustrates a rotor blade dovetail that secures a rotor blade included in an axial flow compressor according to a seventeenth embodiment of the present invention; the downstream side of the inclined surface of the rotor blade dovetail, the inclined surface being a curved surface, is cut in a concave shape formed with a curved surface. The drawing at the bottom of FIG. 19 partially illustrates the rotor blade dovetail in this embodiment when viewed from above.
{Fig. 20} FIG. 20 partially illustrates a rotor blade dovetail that secures a rotor blade included in an axial flow compressor according to an eighteenth embodiment of the present invention; the downstream side of the inclined surface of the rotor blade dovetail, the inclined surface being a curved surface, is cut in a convex shape formed with a curved surface. The drawing at the bottom of FIG. 20 partially illustrates the rotor blade dovetail in this embodiment when viewed from above.
{Fig. 21} FIG. 21 partially illustrates a rotor blade dovetail that secures a rotor blade included in an axial flow compressor according to a nineteenth embodiment of the present invention; the downstream side of the inclined surface of the rotor blade dovetail, the inclined surface being a curved surface, is cut in a concave shape consisting of a plurality of flat surfaces. The drawing at the bottom of FIG. 21 partially illustrates the rotor blade dovetail in this embodiment when viewed from above.
{Fig. 22} FIG. 22 partially illustrates a rotor blade dovetail that secures a rotor blade included in an axial flow compressor according to a twentieth embodiment of the present invention; the downstream side of the inclined surface of the rotor blade dovetail, the inclined surface being a curved surface, is cut in a convex shape consisting of a plurality of flat surfaces. The drawing at the bottom of FIG. 22 partially illustrates the rotor blade dovetail in this embodiment when viewed from above.
{Fig. 23} FIG. 23 partially illustrates a rotor blade dovetail that secures a rotor blade included in an axial flow compressor according to a twenty-first embodiment of the present invention; the downstream side of the inclined surface of the rotor blade dovetail, the inclined surface being a flat surface, is cut in a planar shape. The drawing at the bottom of FIG. 23 partially illustrates the rotor blade dovetail in this embodiment when viewed from above.
{Fig. 24} FIG. 24 partially illustrates a rotor blade dovetail that secures a rotor blade included in an axial flow compressor according to a twenty-second embodiment of the present invention; the downstream side of the inclined surface of the rotor blade dovetail, the inclined surface being a flat surface, is cut in a concave shape formed with a curved surface. The drawing at the bottom of FIG. 24 partially illustrates the rotor blade dovetail in this embodiment when viewed from above.
{Fig. 25} FIG. 25 partially illustrates a rotor blade dovetail that secures a rotor blade included in an axial flow compressor according to a twenty-third embodiment of the present invention; the downstream side of the inclined surface of the rotor blade dovetail, the inclined surface being a flat surface, is cut in a convex shape formed with a curved surface. The drawing at the bottom of FIG. 25 partially illustrates the rotor blade dovetail in this embodiment when viewed from above.
{Fig. 26} FIG. 26 partially illustrates a rotor blade dovetail that secures a rotor blade included in an axial flow compressor according to a twenty-fourth embodiment of the present invention; the downstream side of the inclined surface of the rotor blade dovetail, the inclined surface being a flat surface, is cut in a concave shape consisting of a plurality of flat surfaces. The drawing at the bottom of FIG. 26 partially illustrates the rotor blade dovetail in this embodiment when viewed from above.
{Fig. 27} FIG. 27 partially illustrates a rotor blade dovetail that secures a rotor blade included in an axial flow compressor according to a twenty-fifth embodiment of the present invention; the downstream side of the inclined surface of the rotor blade dovetail, the inclined surface being a flat surface, is cut in a convex shape consisting of a plurality of flat surfaces. The drawing at the bottom of FIG. 27 partially illustrates the rotor blade dovetail in this embodiment when viewed from above.
{Fig. 28} FIG. 28 partially illustrates a rotor blade dovetail that secures a rotor blade included in an axial flow compressor according to a twenty-sixth embodiment of the present invention; both the upstream side and the downstream side of the inclined surface of the rotor blade dovetail, the inclined surface being a curved surface, are cut in a concave shape formed with a spherical surface. The drawing at the bottom of FIG. 28 partially illustrates the rotor blade dovetail in this embodiment when viewed from above.
{Fig. 29} FIG. 29 partially illustrates a rotor blade dovetail that secures a rotor blade included in an axial flow compressor according to a twenty-seventh embodiment of the present invention; both the upstream side and the downstream side of the inclined surface of the rotor blade dovetail, the inclined surface being a curved surface, are cut in a convex shape formed with a spherical surface. The drawing at the bottom of FIG. 29 partially illustrates the rotor blade dovetail in this embodiment when viewed from above.
{Fig. 30} FIG. 30 partially illustrates a rotor blade dovetail that secures a rotor blade included in an axial flow compressor according to a twenty-eighth embodiment of the present invention; both the upstream side and the downstream side of the inclined surface of the rotor blade dovetail, the inclined surface being a curved surface, are cut in a concave shape formed with a spherical surface. The drawing at the bottom of FIG. 30 partially illustrates the rotor blade dovetail in this embodiment when viewed from above.
{Fig. 31} FIG. 31 partially illustrates a rotor blade dovetail that secures a rotor blade included in an axial flow compressor according to a twenty-ninth embodiment of the present invention; both the upstream side and the downstream side of the inclined surface of the rotor blade dovetail, the inclined surface being a curved surface, are cut in a convex shape formed with a curved surface. The drawing at the bottom of FIG. 31 partially illustrates the rotor blade dovetail in this embodiment when viewed from above.
{Fig. 32} FIG. 32 partially illustrates a rotor blade dovetail that secures a rotor blade included in an axial flow compressor according to a thirtieth embodiment of the present invention; both the upstream side and the downstream side of the inclined surface of the rotor blade dovetail, the inclined surface being a curved surface, are cut in a concave shape consisting of a plurality of flat surfaces. The drawing at the bottom of FIG. 32 partially illustrates the rotor blade dovetail in this embodiment when viewed from above.
{Fig. 33} FIG. 33 partially illustrates a rotor blade dovetail that secures a rotor blade included in an axial flow compressor according to a thirty-first embodiment of the present invention; both the upstream side and the downstream side of the inclined surface of the rotor blade dovetail, the inclined surface being a curved surface, are cut in a convex shape consisting of a plurality of flat surfaces. The drawing at the bottom of FIG. 33 partially illustrates the rotor blade dovetail in this embodiment when viewed from above.
{Fig. 34} FIG. 34 partially illustrates a rotor blade dovetail that secures a rotor blade included in an axial flow compressor according to a thirty-second embodiment of the present invention; both the upstream side and the downstream side of the inclined surface of the rotor blade dovetail, the inclined surface being a flat surface, are cut in a planner shape. The drawing at the bottom of FIG. 34 partially illustrates the rotor blade dovetail in this embodiment when viewed from above.
{Fig. 35} FIG. 35 partially illustrates a rotor blade dovetail that secures a rotor blade included in an axial flow compressor according to a thirty-third embodiment of the present invention; both the upstream side and the downstream side of the inclined surface of the rotor blade dovetail, the inclined surface being a flat surface, are cut in a concave shape formed with a curved surface. The drawing at the bottom of FIG. 35 partially illustrates the rotor blade dovetail in this embodiment when viewed from above.
{Fig. 36} FIG. 36 partially illustrates a rotor blade dovetail that secures a rotor blade included in an axial flow compressor according to a thirty-fourth embodiment of the present invention; both the upstream side and the downstream side of the inclined surface of the rotor blade dovetail, the inclined surface being a flat surface, are cut in a convex shape formed with a curved surface. The drawing at the bottom of FIG. 36 partially illustrates the rotor blade dovetail in this embodiment when viewed from above.
{Fig. 37} FIG. 37 partially illustrates a rotor blade dovetail that secures a rotor blade included in an axial flow compressor according to a thirty-fifth embodiment of the present invention; both the upstream side and the downstream side of the inclined surface of the rotor blade dovetail, the inclined surface being a flat surface, are cut in a concave shape consisting of a plurality of flat surfaces. The drawing at the bottom of FIG. 37 partially illustrates the rotor blade dovetail in this embodiment when viewed from above.
{Fig. 38} FIG. 38 partially illustrates a rotor blade dovetail that secures a rotor blade included in an axial flow compressor according to a thirty-sixth embodiment of the present invention; both the upstream side and the downstream side of the inclined surface of the rotor blade dovetail, the inclined surface being a flat surface, are cut in a convex shape consisting of a plurality of flat surfaces. The drawing at the bottom of FIG. 38 partially illustrates the rotor blade dovetail in this embodiment when viewed from above.

### {Description of Embodiments}

The axial flow compressor according to the present invention and a gas turbine equipped with the axial flow compressor will be described below with reference to the drawings.

### {Embodiment 1}

A first embodiment of the axial flow compressor according to the present invention will be described with reference to FIGs. 1 to 3.

FIG. 1 partially illustrates a rotor blade dovetail 5 that secures a rotor blade 4 included in the axial flow compressor according to the first embodiment of the present invention; on the upstream side of the inclined surface 7 of the rotor blade dovetail 5, the inclined surface 7 being a curved surface, a flat surface 6, which is a cut flat surface, is formed.

The drawing at the bottom of FIG. 1 partially illustrates the rotor blade dovetail 5 in this embodiment when viewed from above.

The rotor blade dovetail 5 that secures the rotor blade 4 included in the axial flow compressor, illustrated in FIG. 1, according to the first embodiment has the flat surface 6, which is a cut surface formed by cutting part of the rotor blade dovetail 5 on the upstream side in the flow direction of a working fluid toward a maximum width part 7c of the inclined surface 7, on an end surface 5a of the rotor blade dovetail 5 on the upstream side of the inclined surface 7, which is a curved surface.

The rotor blade dovetail 5 is provided at the bottom of each of a plurality of rotor blades 4, which are part of the axial flow compressor 1 according to this embodiment. Since the rotor blade 4 is placed at a certain angle with respect to the direction of the rotational axis as illustrated in FIG. 2, the rotor blade dovetail 5 is also placed at a certain angle with respect to the direction of the rotational axis. A plurality of wheel dovetails 14 are placed on the outer surface of a compressor wheel 8, which is a rotating body of the axial flow compressor 1, at a certain angle with respect to the direction of the rotational axis of the rotating body. One rotor blade dovetail 5 is fitted into the inside of each wheel dovetail 14, forming the rotating body of the axial flow compressor 1.

As illustrated in FIG. 3, the axial flow compressor 1 according to the first embodiment comprising a rotor blade 4 and a stator blade 18 to intake air from an atmosphere and compress the air as a working fluid, a wheel 8 that secures the rotor blade 4, and a casing that secures the stator blade 18.

As illustrated in FIG. 1, the rotor blade dovetail 5 that secures the rotor blade 4 included in the axial flow compressor according to the first embodiment has the flat surface 6, which is a cut surface formed by cutting part of the rotor blade dovetail 5 on the upstream side in the flow direction of a working fluid toward the maximum width part 7c of the inclined surface 7, on the end surface 5a of the rotor blade dovetail 5 on the upstream side of the inclined surface 7, which is a curved surface.

Since this embodiment uses a structure in which the flat surface 6, which is a cut surface, is formed on the end surface 5a of the rotor blade dovetail 5 on the upstream side of the inclined surface 7, which is a curved surface, in the flow direction of a working fluid, an uneven contact with the wheel dovetail 14 can be reduced and a load exerted from the rotor blade 4 can thereby be evened; the load would otherwise become asymmetric between the forward direction and reverse direction of the rotational direction of the rotor blade 4. As a result, high stress exerted on the rotor blade 4 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 2}

The rotor blade dovetail 5 in the axial flow compressor 1 according to a second embodiment of the present invention will be described with reference to FIG. 4.

The basic structure of the axial flow compressor 1 in the second embodiment illustrated in FIG. 4 is the same as in the first embodiment of the axial flow compressor 1 according to the present invention illustrated in FIGs. 1 to 3, so descriptions of structures common to these two embodiments will be omitted and only differences between them will be described.

FIG. 4 partially illustrates the rotor blade dovetail 5 that secures the rotor blade 4 included in the axial flow compressor 1 according to the second embodiment of the present invention; on an end surface 5b of the rotor blade dovetail 5 on the downstream side of the inclined surface 7, which is a curved surface, a flat surface 6b is formed, which is a cut surface formed by cutting part of the rotor blade dovetail 5 on the downstream side in the flow direction of a working fluid toward the maximum width part 7c of the inclined surface 7.

With the rotor blade dovetail 5 in the axial flow compressor 1 in this embodiment, in which the flat surface 6b, which is a cut surface, is formed on the end surface 5b of the rotor blade dovetail 5 on the downstream side of the inclined surface 7, almost the same effect as with the rotor blade dovetail 5 in the axial flow compressor 1 in the first embodiment can be obtained depending on the design specifications; in the first embodiment, the flat surface 6, which is a cut surface, is formed on the end surface 5a of the rotor blade dovetail 5 on the upstream side of the inclined surface 7.

This embodiment described above uses a structure in which the flat surface 6b, which is a cut surface, is formed on the end surface 5b of the rotor blade dovetail 5 on the downstream side of the inclined surface 7, which is a curved surface, so a load exerted from the rotor blade 4 can be evened; the load would otherwise become asymmetric between the forward direction and reverse direction of the rotational direction of the rotor blade 4. As a result, high stress exerted on the rotor blade 4 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 3}

The rotor blade dovetail 5 in the axial flow compressor 1 according to a third embodiment of the present invention will be described with reference to FIG. 5. The rotor blade dovetail 5 of the axial flow compressor 1 in the third embodiment illustrated in FIG. 5 has the same basic structure as the rotor blade dovetail 5 in the first embodiment of the axial flow compressor 1 according to the present invention illustrated in FIGs. 1 to 3, so descriptions of structures common to these two embodiments will be omitted and only differences between them will be described.

The rotor blade dovetails in the axial flow compressors in a third embodiment and later in the present invention also have the same basic structure as the rotor blade dovetail 5 in the first embodiment of the axial flow compressor 1 according to the present invention illustrated in FIGs. 1 to 3, so descriptions of structures common to the relevant embodiment and the first embodiment will be omitted and only differences between them will be described.

FIG. 5 partially illustrates the rotor blade dovetail 5 that secures the rotor blade 4 included in the axial flow compressor according to the third embodiment of the present invention; on the end surface 5a of the rotor blade dovetail 5 on the upstream side of the inclined surface 7, which is a curved surface, the flat surface 6 is formed, which is a cut surface formed by cutting part of the rotor blade dovetail 5 on the upstream side in the flow direction of a working fluid toward the maximum width part 7c of the inclined surface 7; on the end surface 5b of the rotor blade dovetail 5 on the downstream side of the inclined surface 7 as well, which is a curved surface, the flat surface 6b is formed, which is a cut surface formed by cutting part of the rotor blade dovetail 5 toward the maximum width part 7c of the inclined surface 7.

This embodiment described above uses a structure in which the flat surface 6, which is a cut surface, is formed on the end surface 5a of the rotor blade dovetail 5 on the upstream side of the inclined surface 7, which is a curved surface, and the flat surface 6b, which is a cut surface, is also formed on the end surface 5b of the rotor blade dovetail 5 on the downstream side of the inclined surface 7, so an uneven contact with the wheel dovetail 14 can be greatly reduced on both the upstream side and downstream side of the rotor blade dovetail 5. Therefore, a load exerted from the rotor blade 4 can be further evened; the load would otherwise become asymmetric between the forward direction and reverse direction of the rotational direction of the rotor blade 4. As a result, high stress exerted on the rotor blade 4 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 4}

The rotor blade dovetail 5 in the axial flow compressor according to a fourth embodiment of the present invention will be described with reference to FIG. 6.

FIG. 6 partially illustrates the rotor blade dovetail 5 that secures the rotor blade 4 included in the axial flow compressor according to the fourth embodiment of the present invention; on the end surface 5a of the rotor blade dovetail 5 on the upstream side of the inclined surface 7, which is a curved surface, a spherical concave surface 15 is formed, which is a cut surface.

This embodiment described above uses a structure in which the spherical concave surface 15, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5, illustrated in FIG. 6, in the axial flow compressor in this embodiment, the cut surface is the spherical concave surface 15 instead of the flat surface 6 in the first embodiment. Therefore, the rotor blade dovetail 5 in the axial flow compressor in this embodiment is lighter than the rotor blade dovetail 5 in the axial flow compressor in the first embodiment by the amount of formation of the spherical concave surface 15, so an advantage of reducing stress exerted on the rotor blade dovetail 5 can be obtained.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 5}

The rotor blade dovetail 5 in the axial flow compressor according to a fifth embodiment of the present invention will be described with reference to FIG. 7.

FIG. 7 partially illustrates the rotor blade dovetail 5 that secures the rotor blade 4 included in the axial flow compressor according to the fifth embodiment of the present invention; on the end surface 5a of the rotor blade dovetail 5 on the upstream side of the inclined surface 7, which is a curved surface, a spherical convex surface 16 is formed, which is a cut surface.

This embodiment described above uses a structure in which the spherical convex surface 16, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5, illustrated in FIG. 7, in the axial flow compressor in this embodiment, the cut surface is the spherical convex surface 16. This is preferable for the wheel dovetail 14 in terms of strength.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 6}

The rotor blade dovetail 5 in the axial flow compressor 1 according to a sixth embodiment of the present invention will be described with reference to FIG. 8.

FIG. 8 partially illustrates the rotor blade dovetail 5 that secures the rotor blade 4 included in the axial flow compressor according to the sixth embodiment of the present invention; on the end surface 5a of the rotor blade dovetail 5 on the upstream side of the inclined surface 7, which is a curved surface, a curved concave surface 9 is formed, which is a cut surface.

This embodiment described above uses a structure in which the curved concave surface 9, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved concave surface 9, so the weight of the rotor blade dovetail 5 is reduced by the amount of formation of the curved concave surface 9. This is advantageous in that stress exerted on the rotor blade dovetail 5 can be reduced. Another advantage obtained by forming a cut surface of the rotor blade dovetail 5 in the curved concave surface 9 is that machining is easier than when forming a cut surface of the rotor blade dovetail 5 in the spherical concave surface 15.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 7}

The rotor blade dovetail 5 in the axial flow compressor according to a seventh embodiment of the present invention will be described with reference to FIG. 9.

FIG. 9 partially illustrates the rotor blade dovetail 5 that secures the rotor blade 4 included in the axial flow compressor according to the seventh embodiment of the present invention; on the end surface 5a of the rotor blade dovetail 5 on the upstream side of the inclined surface 7, which is a curved surface, a curved convex surface 10 is formed, which is a cut surface.

This embodiment described above uses a structure in which the curved convex surface 10, which is a cut surface, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved convex surface 10, so the weight of the rotor blade dovetail 5 is reduced by the amount of formation of the curved convex surface 10. This is advantageous in that stress exerted on the rotor blade dovetail 5 can be reduced. Another advantage obtained by forming a cut surface of the rotor blade dovetail 5 in the curved convex surface 10 is that machining is easier than when forming a cut surface of the rotor blade dovetail 5 in the spherical convex surface 16.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 8}

The rotor blade dovetail 5 in the axial flow compressor according to an eighth embodiment of the present invention will be described with reference to FIG. 10.

FIG. 10 partially illustrates the rotor blade dovetail 5 that secures the rotor blade 4 included in the axial flow compressor according to the eighth embodiment of the present invention; on the end surface 5a of the rotor blade dovetail 5 on the upstream side of the inclined surface 7, which is a curved surface, a concave surface 12 consisting of a plurality of flat surfaces, each being a cut surface, is formed.

This embodiment described above uses a structure in which the concave surface 12 consisting of a plurality of flat surfaces, each of which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the concave surface 12 consisting of a plurality of flat surfaces, so the weight of the rotor blade dovetail 5 is reduced by the amount of formation of the concave surface 12. This is advantageous in that stress exerted on the rotor blade dovetail 5 can be reduced. Another advantage obtained by forming a cut surface of the rotor blade dovetail 5 in the concave surface 12 consisting of a plurality of flat surfaces is that machining is easier than when forming a cut surface of the rotor blade dovetail 5 in the spherical concave surface 15 or curved concave surface 9.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 9}

The rotor blade dovetail 5 in the axial flow compressor according to a ninth embodiment of the present invention will be described with reference to FIG. 11.

FIG. 11 partially illustrates the rotor blade dovetail 5 that secures the rotor blade 4 included in the axial flow compressor according to the ninth embodiment of the present invention; on the end surface 5a of the rotor blade dovetail 5 on the upstream side of the inclined surface 7, which is a curved surface, a convex surface 13 consisting of a plurality of flat surfaces, each being a cut surface, is formed.

This embodiment described above uses a structure in which the convex surface 13 consisting of a plurality of flat surfaces, each of which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the convex surface 13 consisting of a plurality of flat surfaces, so the weight of the rotor blade dovetail 5 is reduced by the amount of formation of the convex surface 13. This is advantageous in that stress exerted on the rotor blade dovetail 5 can be reduced. Another advantage obtained by forming a cut surface of the rotor blade dovetail 5 in the convex surface 13 consisting of a plurality of flat surfaces is that machining is easier than when forming a cut surface of the rotor blade dovetail 5 in the spherical convex surface 16 or curved convex surface 10.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 10}

The rotor blade dovetail 5 in the axial flow compressor according to a tenth embodiment of the present invention will be described with reference to FIG. 12.

FIG. 12 partially illustrates the rotor blade dovetail 5 that secures the rotor blade 4 included in the axial flow compressor according to the tenth embodiment of the present invention; on the end surface 5a of the rotor blade dovetail 5 on the upstream side of an inclined surface 11, which is a flat surface, the flat surface 6, which is a cut surface, is formed.

This embodiment described above uses a structure in which the flat surface 6, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 11}

The rotor blade dovetail 5 in the axial flow compressor according to an eleventh embodiment of the present invention will be described with reference to FIG. 13.

FIG. 13 partially illustrates the rotor blade dovetail 5 that secures the rotor blade 4 included in the axial flow compressor according to the eleventh embodiment of the present invention; on the end surface 5a of the rotor blade dovetail 5 on the upstream side of the inclined surface 11, which is a cut surface, the curved concave surface 9 is formed, which is a cut surface.

This embodiment described above uses a structure in which the curved concave surface 9, which is a cut surface, is formed on the end surface 5a of the rotor blade dovetail 5 on the upstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

This embodiment described above uses a structure in which the curved concave surface 9, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved concave surface 9, so the weight of the rotor blade dovetail 5 is reduced by the amount of formation of the curved concave surface 9. This is advantageous in that stress exerted on the rotor blade dovetail 5 can be reduced. Another advantage obtained by forming a cut surface of the rotor blade dovetail 5 in the curved concave surface 9 is that machining is easier than when forming a cut surface of the rotor blade dovetail 5 in the spherical concave surface 15.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 12}

The rotor blade dovetail 5 in the axial flow compressor according to a twelfth embodiment of the present invention will be described with reference to FIG. 14.

FIG. 14 partially illustrates the rotor blade dovetail 5 that secures the rotor blade 4 included in the axial flow compressor according to the twelfth embodiment of the present invention; on the end surface 5a of the rotor blade dovetail 5 on the upstream side of the inclined surface 11, which is a cut surface, the curved convex surface 10 is formed, which is a cut surface.

This embodiment described above uses a structure in which the curved convex surface 10, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved convex surface 10, so the weight of the rotor blade dovetail 5 is reduced by the amount of formation of the curved convex surface 10. This is advantageous in that stress exerted on the rotor blade dovetail 5 can be reduced. Another advantage obtained by forming a cut surface of the rotor blade dovetail 5 in the curved convex surface 10 is that machining is easier than when forming a cut surface of the rotor blade dovetail 5 in the spherical convex surface 16.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 13}

The rotor blade dovetail 5 in the axial flow compressor according to a thirteenth embodiment of the present invention will be described with reference to FIG. 15.

FIG. 15 partially illustrates the rotor blade dovetail 5 that secures the rotor blade 4 included in the axial flow compressor according to the thirteenth embodiment of the present invention; on the end surface 5a of the rotor blade dovetail 5 on the upstream side of the inclined surface 11, which is a flat surface, the concave surface 12 consisting of a plurality of flat surfaces, each being a cut surface, is formed.

This embodiment described above uses a structure in which the concave surface 12 consisting of a plurality of flat surfaces, each of which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the concave surface 12 consisting of a plurality of flat surfaces, so the weight of the rotor blade dovetail 5 is reduced by the amount of formation of the concave surface 12. This is advantageous in that stress exerted on the rotor blade dovetail 5 can be reduced. Another advantage obtained by forming a cut surface of the rotor blade dovetail 5 in the concave surface 12 consisting of a plurality of flat surfaces is that machining is easier than when forming a cut surface of the rotor blade dovetail 5 in the spherical concave surface 15.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 14}

The rotor blade dovetail 5 in the axial flow compressor according to a fourteenth embodiment of the present invention will be described with reference to FIG. 16.

FIG. 16 partially illustrates the rotor blade dovetail 5 that secures the rotor blade 4 included in the axial flow compressor according to the fourteenth embodiment of the present invention; on the end surface 5a of the rotor blade dovetail 5 on the upstream side of the inclined surface 11, which is a flat surface, the concave surface 13 consisting of a plurality of flat surfaces, each being a cut surface, is formed.

This embodiment described above uses a structure in which the convex surface 13 consisting of a plurality of flat surfaces, each of which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the convex surface 13 consisting of a plurality of flat surfaces, so the weight of the rotor blade dovetail 5 is reduced by the amount of formation of the convex surface 13. This is advantageous in that stress exerted on the rotor blade dovetail 5 can be reduced. Another advantage obtained by forming a cut surface of the rotor blade dovetail 5 in the convex surface 13 consisting of a plurality of flat surfaces is that machining is easier than when forming a cut surface of the rotor blade dovetail 5 in the spherical convex surface 16.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 15}

The rotor blade dovetail 5 in the axial flow compressor according to a fifteenth embodiment of the present invention will be described with reference to FIG. 17.

FIG. 17 partially illustrates the rotor blade dovetail 5 that secures the rotor blade 4 included in the axial flow compressor according to the fifteenth embodiment of the present invention; on the end surface 5b of the rotor blade dovetail 5 on the downstream side of the inclined surface 7, which is a curved surface, a curved concave surface 15b is formed, which is a cut surface.

This embodiment described above uses a structure in which the curved concave surface 15b, which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved concave surface 15b, so the weight of the rotor blade dovetail 5 is reduced by the amount of formation of the spherical concave surface 15b. This is advantageous in that stress exerted on the rotor blade dovetail 5 can be reduced. Another advantage obtained by forming a cut surface of the rotor blade dovetail 5 in the spherical concave surface 15b is that machining is easier than when forming a cut surface of the rotor blade dovetail 5 in the spherical concave surface 15.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 16}

The rotor blade dovetail 5 in the axial flow compressor according to a sixteenth embodiment of the present invention will be described with reference to FIG. 18.

FIG. 18 partially illustrates the rotor blade dovetail 5 that secures the rotor blade 4 included in the axial flow compressor according to the sixteenth embodiment of the present invention; on the end surface 5b of the rotor blade dovetail 5 on the downstream side of the inclined surface 7, which is a curved surface, a curved convex surface 16b is formed, which is a cut surface.

This embodiment described above uses a structure in which the curved convex surface 16b, which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved convex surface 16b, so the weight of the rotor blade dovetail 5 is reduced by the amount of formation of the spherical convex surface 16b. This is advantageous in that stress exerted on the rotor blade dovetail 5 can be reduced. Another advantage obtained by forming a cut surface of the rotor blade dovetail 5 in the spherical convex surface 16b is that machining is easier than when forming a cut surface of the rotor blade dovetail 5 in the spherical convex surface 16.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 17}

The rotor blade dovetail 5 in the axial flow compressor according to a seventeenth embodiment of the present invention will be described with reference to FIG. 19.

FIG. 19 partially illustrates the rotor blade dovetail 5 that secures the rotor blade 4 included in the axial flow compressor according to the seventeenth embodiment of the present invention; on the end surface 5b of the rotor blade dovetail 5 on the downstream side of the inclined surface 7, which is a curved surface, a curved concave surface 9b is formed, which is a cut surface.

This embodiment described above uses a structure in which the curved concave surface 9b, which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved concave surface 9b, so the weight of the rotor blade dovetail 5 is reduced by the amount of formation of the curved concave surface 9b. This is advantageous in that stress exerted on the rotor blade dovetail 5 can be reduced. Another advantage obtained by forming a cut surface of the rotor blade dovetail 5 in the curved concave surface 9b is that machining is easier than when forming a cut surface of the rotor blade dovetail 5 in the spherical concave surface 15.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 18}

The rotor blade dovetail 5 in the axial flow compressor according to an eighteenth embodiment of the present invention will be described with reference to FIG. 20.

FIG. 20 partially illustrates the rotor blade dovetail 5 that secures the rotor blade 4 included in the axial flow compressor according to the eighteenth embodiment of the present invention; on the end surface 5b of the rotor blade dovetail 5 on the downstream side of the inclined surface 7, which is a curved surface, a curved convex surface 10b is formed, which is a cut surface.

This embodiment described above uses a structure in which the curved convex surface 10b, which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the curved convex surface 10b, so the weight of the rotor blade dovetail 5 is reduced by the amount of formation of the curved convex surface 10b. This is advantageous in that stress exerted on the rotor blade dovetail 5 can be reduced. Another advantage obtained by forming a cut surface of the rotor blade dovetail 5 in the curved convex surface 10b is that machining is easier than when forming a cut surface of the rotor blade dovetail 5 in the spherical convex surface 16.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 19}

The rotor blade dovetail 5 in the axial flow compressor according to a nineteenth embodiment of the present invention will be described with reference to FIG. 21.

FIG. 21 partially illustrates the rotor blade dovetail 5 that secures the rotor blade 4 included in the axial flow compressor according to the nineteenth embodiment of the present invention; on the end surface 5b of the rotor blade dovetail 5 on the downstream side of the inclined surface 7, which is a curved surface, a concave surface 12b consisting of a plurality of flat surfaces, each being a cut surface, is formed.

This embodiment described above uses a structure in which the concave surface 12b consisting of a plurality of flat surfaces, each of which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the concave surface 12b consisting of a plurality of flat surfaces, so the weight of the rotor blade dovetail 5 is reduced by the amount of formation of the concave surface 12b. This is advantageous in that stress exerted on the rotor blade dovetail 5 can be reduced. Another advantage obtained by forming a cut surface of the rotor blade dovetail 5 in the concave surface 12b consisting of a plurality of flat surfaces is that machining is easier than when forming a cut surface of the rotor blade dovetail 5 in the spherical concave surface 15 or curved concave surface 9.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 20}

The rotor blade dovetail 5 in the axial flow compressor according to a twentieth embodiment of the present invention will be described with reference to FIG. 22.

FIG. 22 partially illustrates the rotor blade dovetail 5 that secures the rotor blade 4 included in the axial flow compressor 1 according to the twentieth embodiment of the present invention; on the end surface 5b of the rotor blade dovetail 5 on the downstream side of the inclined surface 7, which is a curved surface, a convex surface 13b consisting of a plurality of flat surfaces, each being a cut surface, is formed.

This embodiment described above uses a structure in which the convex surface 13b consisting of a plurality of flat surfaces, each of which is a cut surface formed by cutting part of the rotor blade dovetail 5 on the downstream side in the flow direction of a working fluid toward the maximum width part 7c of the inclined surface 7, is formed on the end surface 5b of the rotor blade dovetail 5 on the downstream side of the inclined surface 7, which is a curved surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the convex surface 13b consisting of a plurality of flat surfaces, so the weight of the rotor blade dovetail 5 is reduced by the amount of formation of the convex surface 13b. This is advantageous in that stress exerted on the rotor blade dovetail 5 can be reduced. Another advantage obtained by forming a cut surface of the rotor blade dovetail 5 in the convex surface 13b consisting of a plurality of flat surfaces is that machining is easier than when forming a cut surface of the rotor blade dovetail 5 in the spherical convex surface 16 or curved convex surface 10.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 21}

The rotor blade dovetail 5 in the axial flow compressor according to a twenty-first embodiment of the present invention will be described with reference to FIG. 23.

FIG. 23 partially illustrates the rotor blade dovetail 5 that secures the rotor blade 4 included in the axial flow compressor according to the twenty-first embodiment of the present invention; on an end surface 5b of the rotor blade dovetail 5 on the downstream side of the inclined surface 11, which is a flat surface, the flat surface 6b is formed, which is a cut surface.

This embodiment described above uses a structure in which the flat surface 6b, which is a cut surface formed by cutting part of the rotor blade dovetail 5 on the downstream side in the flow direction of a working fluid toward the maximum width part 11c of the inclined surface 11, is formed on the end surface 5b of the rotor blade dovetail 5 on the upstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 22}

The rotor blade dovetail 5 in the axial flow compressor according to a twenty-second embodiment of the present invention will be described with reference to FIG. 24.

FIG. 24 partially illustrates the rotor blade dovetail 5 that secures the rotor blade 4 included in the axial flow compressor 1 according to the twenty-second embodiment of the present invention; on an end surface 5b of the rotor blade dovetail 5 on the downstream side of the inclined surface 11, which is a flat surface, the curved concave surface 9b is formed, which is a cut surface.

This embodiment described above uses a structure in which the curved concave surface 9b, which is a cut surface formed by cutting part of the rotor blade dovetail 5 on the downstream side in the flow direction of a working fluid toward the maximum width part 11c of the inclined surface 11, is formed on the end surface 5b of the rotor blade dovetail 5 on the downstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 23}

The rotor blade dovetail 5 in the axial flow compressor according to a twenty-third embodiment of the present invention will be described with reference to FIG. 25.

FIG. 25 partially illustrates the rotor blade dovetail 5 that secures the rotor blade 4 included in the axial flow compressor according to the twenty-third embodiment of the present invention; on an end surface 5b of the rotor blade dovetail 5 on the downstream side of the inclined surface 11, which is a flat surface, the curved convex surface 10b is formed, which is a cut surface.

This embodiment described above uses a structure in which the curved convex surface 10b, which is a cut surface formed by cutting part of the rotor blade dovetail 5 on the downstream side in the flow direction of a working fluid toward the maximum width part 11c of the inclined surface 11, is formed on the end surface 5b of the rotor blade dovetail 5 on the downstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 24}

The rotor blade dovetail 5 in the axial flow compressor according to a twenty-fourth embodiment of the present invention will be described with reference to FIG. 26.

FIG. 26 partially illustrates the rotor blade dovetail 5 that secures the rotor blade 4 included in the axial flow compressor according to the twenty-fourth embodiment of the present invention; on the end surface 5b of the rotor blade dovetail 5 on the downstream side of the inclined surface 11, which is a flat surface, the concave surface 12b consisting of a plurality of flat surfaces, each being a cut surface, is formed.

This embodiment described above uses a structure in which the concave surface 12b consisting of a plurality of flat surfaces, each of which is a cut surface formed by cutting part of the rotor blade dovetail 5 on the downstream side in the flow direction of a working fluid toward the maximum width part 11c of the inclined surface 11, is formed on the end surface 5b of the rotor blade dovetail 5 on the downstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the concave surface 12b consisting of a plurality of flat surfaces, so the weight of the rotor blade dovetail 5 is reduced by the amount of formation of the concave surface 12b. This is advantageous in that stress exerted on the rotor blade dovetail 5 can be reduced. Another advantage obtained by forming a cut surface of the rotor blade dovetail 5 in the concave surface 12b consisting of a plurality of flat surfaces is that machining is easier than when forming a cut surface of the rotor blade dovetail 5 in the spherical concave surface 15 or curved concave surface 9.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 25}

The rotor blade dovetail 5 in the axial flow compressor according to a twenty-fifth embodiment of the present invention will be described with reference to FIG. 27.

FIG. 27 partially illustrates the rotor blade dovetail 5 that secures the rotor blade 4 included in the axial flow compressor according to the twenty-fifth embodiment of the present invention; on the end surface 5b of the rotor blade dovetail 5 on the downstream side of the inclined surface 11, which is a flat surface, the concave surface 13b consisting of a plurality of flat surfaces, each being a cut surface, is formed.

This embodiment described above uses a structure in which the convex surface 13b consisting of a plurality of flat surfaces, each of which is a cut surface formed by cutting part of the rotor blade dovetail 5 on the downstream side in the flow direction of a working fluid toward the maximum width part 11c of the inclined surface 11, is formed on the end surface 5b of the rotor blade dovetail 5 on the downstream side of the inclined surface 11, which is a flat surface. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the cut surface is the convex surface 13b consisting of a plurality of flat surfaces, so the weight of the rotor blade dovetail 5 is reduced by the amount of formation of the convex surface 13b. This is advantageous in that stress exerted on the rotor blade dovetail 5 can be reduced. Another advantage obtained by forming a cut surface of the rotor blade dovetail 5 in the convex surface 13b consisting of a plurality of flat surfaces is that machining is easier than when forming a cut surface of the rotor blade dovetail 5 in the spherical convex surface 16 or curved convex surface 10.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 26}

The rotor blade dovetail 5 in the axial flow compressor according to a twenty-sixth embodiment of the present invention will be described with reference to FIG. 28.

FIG. 28 partially illustrates the rotor blade dovetail 5 that secures the rotor blade 4 included in the axial flow compressor according to the twenty-sixth embodiment of the present invention; on the end surface 5a of the rotor blade dovetail 5 on the upstream side of the inclined surface 7, which is a curved surface, the spherical concave surface 15 is formed, which is a cut surface; on the end surface 5b of the rotor blade dovetail 5 on the downstream side of the inclined surface 7, which is a curved surface, the spherical concave surface15b is formed, which is a cut surface.

This embodiment described above uses a structure in which the spherical concave surface 15, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the spherical concave surface15b, which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the spherical concave surface 15 and spherical concave surface 15b are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the spherical concave surface 15 and spherical concave surface 15b. This is advantageous in that stress exerted on the rotor blade dovetail 5 can be reduced.

This embodiment described above uses a structure in which the spherical concave surface 15, which is a cut surface, is formed on the end surface 5a of the rotor blade dovetail 5 on the upstream side of the inclined surface 7, which is a curved surface, and the spherical concave surface 15b, which is a cut surface formed, is also formed on the end surface 5b of the rotor blade dovetail 5 on the downstream side of the inclined surface 7, which is a curved surface, so an uneven contact with the wheel dovetail 14 can be greatly reduced on both the upstream side and downstream side of the rotor blade dovetail 5. Therefore, a load exerted from the rotor blade 4 can be further evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the spherical concave surface 15 and spherical concave surface 15b are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the spherical concave surface 15 and spherical concave surface 15b. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 27}

The rotor blade dovetail 5 in the axial flow compressor according to a twenty-seventh embodiment of the present invention will be described with reference to FIG. 29.

FIG. 29 partially illustrates the rotor blade dovetail 5 that secures the rotor blade 4 included in the axial flow compressor according to the twenty-seventh embodiment of the present invention; on the end surface 5a of the rotor blade dovetail 5 on the upstream side of the inclined surface 7, which is a curved surface, the spherical convex surface 16 is formed, which is a cut surface; on the end surface 5b of the rotor blade dovetail 5 on the downstream side of the inclined surface 7, which is a curved surface, the spherical convex surface 16b is formed, which is a cut surface.

This embodiment described above uses a structure in which the spherical convex surface 16, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the spherical convex surface 16b, which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

This embodiment described above uses a structure in which the spherical convex surface 16, which is a cut surface, is formed on the end surface 5a of the rotor blade dovetail 5 on the upstream side of the inclined surface 7, which is a curved surface, and the spherical convex surface 16b, which is a cut surface formed, is also formed on the end surface 5b of the rotor blade dovetail 5 on the downstream side of the inclined surface 7, which is a curved surface, so an uneven contact with the wheel dovetail 14 can be greatly reduced on both the upstream side and downstream side of the rotor blade dovetail 5. Therefore, a load exerted from the rotor blade 4 can be further evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the spherical convex surface 16 and spherical convex surface 16b are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the spherical convex surface 16 and spherical convex surface 16b. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 28}

The rotor blade dovetail 5 in the axial flow compressor according to a twenty-eighth embodiment of the present invention will be described with reference to FIG. 30.

FIG. 30 partially illustrates the rotor blade dovetail 5 that secures the rotor blade 4 included in the axial flow compressor according to the twenty-eighth embodiment of the present invention; on the end surface 5a of the rotor blade dovetail 5 on the upstream side of the inclined surface 7, which is a curved surface, the curved concave surface 9 is formed, which is a cut surface; on the end surface 5b of the rotor blade dovetail 5 on the downstream side of the inclined surface 7, which is a curved surface, the curved concave surface 9b is formed, which is a cut surface.

This embodiment described above uses a structure in which the curved concave surface 9, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the curved concave surface 9b, which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the curved concave surface 9 and curved concave surface 9b are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the curved concave surface 9 and curved concave surface 9b. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 29}

The rotor blade dovetail 5 in the axial flow compressor according to a twenty-ninth embodiment of the present invention will be described with reference to FIG. 31.

FIG. 31 partially illustrates the rotor blade dovetail 5 that secures the rotor blade 4 included in the axial flow compressor according to the twenty-ninth embodiment of the present invention; on the end surface 5a of the rotor blade dovetail 5 on the upstream side of the inclined surface 7, which is a curved surface, the curved convex surface 10 is formed, which is a cut surface; on the end surface 5b of the rotor blade dovetail 5 on the downstream side of the inclined surface 7, which is a curved surface, the curved convex surface 10b is formed, which is a cut surface.

This embodiment described above uses a structure in which the curved convex surface 10, which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the curved convex surface 10b, which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the curved convex surface 10 and curved convex surface 10b are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the curved convex surface 10 and curved convex surface lOb. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 30}

The rotor blade dovetail 5 in the axial flow compressor according to a thirtieth embodiment of the present invention will be described with reference to FIG. 32.

FIG. 32 partially illustrates the rotor blade dovetail 5 that secures the rotor blade 4 included in the axial flow compressor according to the thirtieth embodiment of the present invention; on the end surface 5a of the rotor blade dovetail 5 on the upstream side of the inclined surface 7, which is a curved surface, the concave surface 12 consisting of a plurality of flat surfaces, each being a cut surface, is formed; on the end surface 5b of the rotor blade dovetail 5 on the downstream side of the inclined surface 7, which is a curved surface, the concave surface 12b consisting of a plurality of flat surfaces, each being a cut surface, is formed.

This embodiment described above uses a structure in which the concave surface 12 consisting of a plurality of flat surfaces, each of which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the concave surface 12b consisting of a plurality of flat surfaces, each of which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the concave surface 12 and concave surface 12b consisting of a plurality of flat surfaces are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the concave surface 12 and concave surface 12b. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 31}

The rotor blade dovetail 5 in the axial flow compressor according to a thirty-first embodiment of the present invention will be described with reference to FIG. 33.

FIG. 33 partially illustrates the rotor blade dovetail 5 that secures the rotor blade 4 included in the axial flow compressor according to the thirty-first embodiment of the present invention; on the end surface 5a of the rotor blade dovetail 5 on the upstream side of the inclined surface 7, which is a curved surface, the convex surface 13 consisting of a plurality of flat surfaces, each being a cut surface, is formed; on the end surface 5b of the rotor blade dovetail 5 on the downstream side of the inclined surface 7, which is a curved surface, the convex surface 13b consisting of a plurality of flat surfaces, each being a cut surface, is formed.

This embodiment described above uses a structure in which the convex surface 13 consisting of a plurality of flat surfaces, each of which is a cut surface formed by cutting part of the rotor blade dovetail 5 on the upstream side in the flow direction of a working fluid toward the maximum width part 7c of the inclined surface 7, is formed on the end surface 5a of the rotor blade dovetail 5 on the upstream side of the inclined surface 7, which is a curved surface, and the convex surface 13b consisting of a plurality of flat surfaces, each of which is a cut surface formed by cutting part of the rotor blade dovetail 5 on the downstream side in the flow direction of the working fluid toward the maximum width part 7c of the inclined surface 7, is also formed on the end surface 5b of the rotor blade dovetail 5 on the downstream side of the inclined surface 7. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the convex surface 13 and convex surface 13b consisting of a plurality of flat surfaces are respectively formed as cut surfaces on the end surface 5a of the rotor blade dovetail 5 on the upstream side of the inclined surface 7 and the end surface 5b on its downstream side, so the weight of the rotor blade dovetail 5 is reduced by the amount of formation of the convex surface 13 and convex surface 13b. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 32}

The rotor blade dovetail 5 in the axial flow compressor according to a thirty-second embodiment of the present invention will be described with reference to FIG. 34.

FIG. 34 partially illustrates the rotor blade dovetail 5 that secures the rotor blade 4 included in the axial flow compressor according to the thirty-second embodiment of the present invention; on an end surface 5a of the rotor blade dovetail 5 on the upstream side of the inclined surface 11, which is a flat surface, the flat surface 6 is formed, which is a cut surface; on an end surface 5b of the rotor blade dovetail 5 on the downstream side of the inclined surface 11, which is a flat surface, the flat surface 6b is formed, which is a cut surface.

This embodiment described above uses a structure in which the flat surface 6, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface, and the flat surface 6b, which is a cut surface formed by cutting part of the rotor blade dovetail 5 on the downstream side in the flow direction of the working fluid toward the maximum width part 11c of the inclined surface 11, is also formed on the end surface 5b of the rotor blade dovetail 5 on the downstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the flat surface 6 and flat surface 6b are respectively formed as cut surfaces on the end surface 5a of the rotor blade dovetail 5 on the upstream side of the inclined surface 11 and the end surface 5b on its downstream side, so the weight of the rotor blade dovetail 5 is reduced by the amount of formation of the flat surface 6 and flat surface 6b. This is advantageous in that stress exerted on the rotor blade dovetail 5 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 33}

The rotor blade dovetail 5 in the axial flow compressor according to a thirty-third embodiment of the present invention will be described with reference to FIG. 35.

FIG. 35 partially illustrates the rotor blade dovetail 5 that secures the rotor blade 4 included in the axial flow compressor according to the thirty-third embodiment of the present invention; on an end surface 5a of the rotor blade dovetail 5 on the upstream side of the inclined surface 11, which is a flat surface, the curved concave surface 9 is formed, which is a cut surface; on an end surface 5b of the rotor blade dovetail 5 on the downstream side of the inclined surface 11, which is a flat surface, the curved concave surface 9b is formed, which is a cut surface.

This embodiment described above uses a structure in which the curved concave surface 9, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface, and the curved concave surface 9b, which is a cut surface formed by cutting part of the rotor blade dovetail 5 on the downstream side in the flow direction of the working fluid toward the maximum width part 11c of the inclined surface 11, is also formed on the end surface 5b of the rotor blade dovetail 5 on the downstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the curved concave surface 9 and curved concave surface 9b are respectively formed as cut surfaces on the end surface 5a of the rotor blade dovetail 5 on the upstream side of the inclined surface 11 and the end surface 5b on its downstream side, so the weight of the rotor blade dovetail 5 is reduced by the amount of formation of the curved concave surface 9 and curved concave surface 9b. This is advantageous in that stress exerted on the rotor blade dovetail 5 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 34}

The rotor blade dovetail 5 in the axial flow compressor according to a thirty-fourth embodiment of the present invention will be described with reference to FIG. 36.

FIG. 36 partially illustrates the rotor blade dovetail 5 that secures the rotor blade 4 included in the axial flow compressor according to the thirty-fourth embodiment of the present invention; on an end surface 5a of the rotor blade dovetail 5 on the upstream side of the inclined surface 11, which is a flat surface, the curved convex surface 10 is formed, which is a cut surface;
on an end surface 5b of the rotor blade dovetail 5 on the downstream side of the inclined surface 11, which is a flat surface, the curved convex surface 10b is formed, which is a cut surface.

This embodiment described above uses a structure in which the curved convex surface 10, which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface, and the curved convex surface 10b, which is a cut surface formed by cutting part of the rotor blade dovetail 5 on the downstream side in the flow direction of the working fluid toward the maximum width part 11c of the inclined surface 11, is also formed on the end surface 5b of the rotor blade dovetail 5 on the downstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the curved convex surface 10 and curved convex surface 10b are respectively formed as cut surfaces on the end surface 5a of the rotor blade dovetail 5 on the upstream side of the inclined surface 11 and the end surface 5b on its downstream side, so the weight of the rotor blade dovetail 5 is reduced by the amount of formation of the curved convex surface 10 and curved convex surface 10b. This is advantageous in that stress exerted on the rotor blade dovetail 5 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

### {Embodiment 34}

The rotor blade dovetail 5 in the axial flow compressor according to a thirty-fifth embodiment of the present invention will be described with reference to FIG. 37.

FIG. 37 partially illustrates the rotor blade dovetail 5 that secures the rotor blade 4 included in the axial flow compressor according to the thirty-fifth embodiment of the present invention; on the end surface 5a of the rotor blade dovetail 5 on the upstream side of the inclined surface 11, which is a flat surface, the concave surface 12 consisting of a plurality of flat surfaces, each being a cut surface, is formed; on the end surface 5b of the rotor blade dovetail 5 on the downstream side of the inclined surface 11, which is a flat surface, the concave surface 12b consisting of a plurality of flat surfaces, each being a cut surface, is formed.

This embodiment described above uses a structure in which the concave surface 12 consisting of a plurality of flat surfaces, each of which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface, and the concave surface 12b consisting of a plurality of flat surfaces, each of which is a cut surface formed by cutting part of the rotor blade dovetail 5 on the downstream side in the flow direction of the working fluid toward the maximum width part 11c of the inclined surface 11, is also formed on the end surface 5b of the rotor blade dovetail 5 on the downstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the concave surface 12 and concave surface 12b consisting of a plurality of flat surfaces are respectively formed as cut surfaces on the end surface 5a of the rotor blade dovetail 5 on the upstream side of the inclined surface 11 and the end surface 5b on its downstream side, so the weight of the rotor blade dovetail 5 is reduced by the amount of formation of the concave surface 12 and concave surface 12b. This is advantageous in that stress exerted on the rotor blade dovetail 5 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

According to this embodiment structured as described above, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized. {Embodiment 36}

The rotor blade dovetail 5 in the axial flow compressor according to a thirty-sixth embodiment of the present invention will be described with reference to FIG. 38.

FIG. 38 partially illustrates the rotor blade dovetail 5 that secures the rotor blade 4 included in the axial flow compressor according to the thirty-sixth embodiment of the present invention; on the end surface 5a of the rotor blade dovetail 5 on the upstream side of the inclined surface 11, which is a flat surface, the convex surface 13 consisting of a plurality of flat surfaces, each being a cut surface, is formed; on the end surface 5b of the rotor blade dovetail 5 on the downstream side of the inclined surface 11, which is a flat surface, the convex surface 13b consisting of a plurality of flat surfaces, each being a cut surface, is formed.

This embodiment described above uses a structure in which the convex surface 13 consisting of a plurality of flat surfaces, each of which is a cut surface formed by cutting part of the rotor blade dovetail 5 on the upstream side in the flow direction of a working fluid toward the maximum width part 11c of the inclined surface 11, is formed on the end surface 5a of the rotor blade dovetail 5 on the upstream side of the inclined surface 11, which is a flat surface, and the convex surface 13b consisting of a plurality of flat surfaces, each of which is a cut surface formed by cutting part of the rotor blade dovetail 5 on the downstream side in the flow direction of the working fluid toward the maximum width part 11c of the inclined surface 11, is also formed on the end surface 5b of the rotor blade dovetail 5 on the downstream side of the inclined surface 11. Therefore, a load exerted from the rotor blade 4 can be evened; the load would otherwise become asymmetric between the forward direction and reverse direction of the rotational direction of the rotor blade 4. As a result, high stress exerted on the rotor blade 4 can be reduced.

With the rotor blade dovetail 5 in the axial flow compressor in this embodiment, the convex surface 13 and convex surface 13b consisting of a plurality of flat surfaces are respectively formed as cut surfaces on the end surface 5a of the rotor blade dovetail 5 on the upstream side of the inclined surface 11 and the end surface 5b on its downstream side, so the weight of the rotor blade dovetail 5 is reduced by the amount of formation of the convex surface 13 and convex surface 13b. This is advantageous in that stress exerted on the rotor blade dovetail 5 can be reduced.

With the rotor blade dovetail 5 in the axial flow compressor in this embodiment, the inclined surface 11 of the rotor blade dovetail 5 is a flat surface, so the weight of the rotor blade dovetail 5 is reduced by the amount of formation of the inclined surface 11 as a flat surface. This is advantageous in that stress exerted on the rotor blade dovetail 5 can be reduced.

With the rotor blade dovetail 5 in the axial flow compressor according to each embodiment of the present invention, any one of the flat surfaces 6 and 6b, the curved concave surfaces 9 and 9b, the curved convex surfaces 10 and 10b, the spherical concave surfaces15 and 15b, the spherical convex surfaces 16 and 16b, the concave surfaces 12 and 12b consisting of a plurality of flat surfaces, and the convex surfaces 13 and 13b consisting of a plurality of flat surfaces, each of which is a cut surface, is formed on at least one of the end surface 5a of the rotor blade dovetail 5 on the upstream side of the inclined surface 7, which is a curved surface, and the end surface 5b on its downstream side and the end surface 5a of the rotor blade dovetail 5 on the upstream side of the inclined surface 11, which is a flat surface, and the end surface 5b on its downstream side. A range in which the above cut surfaces are formed on the end surfaces 5a and 5b of the inclined surfaces 7 and 11 of the rotor blade dovetail 5 is a portion, of the rotor blade dovetail 5, that corresponds to a range in which stress at a certain level or higher is exerted from the rotor blade dovetail 5 to the wheel dovetail 14.

When an axial flow compressor is started or stopped, stress exerted from the rotor blade dovetail to the wheel dovetail may be increased to a designed allowable stress or higher.

To allow for allowable stress at a certain level or higher exerted on the wheel dovetail 14, any one of the above cut surfaces is formed in part of the rotor blade dovetail 5, the part being a range, of the rotor blade dovetail 5, that corresponds to a range, in the wheel dovetail 14, in which stress at a certain level or higher is exerted from the rotor blade dovetail 5 to the wheel dovetail 14

To form a cut surface by cutting part of the rotor blade dovetail 5 of the axial flow compressor 1 in each embodiment of the present invention described above, the material of the rotor blade dovetail 5 may be casted so that the rotor blade dovetail 5 is formed in a state in which it has a certain cut surface in advance. Alternatively, the rotor blade dovetail 5 may be cut by, for example, machining or electric discharge machining.

According to each embodiment, structured as described above, of the present invention, an axial flow compressor having rotor blade dovetails that reduce an uneven contact with each wheel dovetail so as to level a load, exerted from the relevant rotor blade, that would otherwise become asymmetric between the forward direction and reverse direction of the rotational direction of the rotor blade and to thereby reduce high stress exerted on the rotor blade, and a gas turbine, can be realized.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### {Reference Signs List}

1: compressor
2: combustor
3: turbine
4: rotor blade
5: rotor blade dovetail
5a, 5b: end surface
6: cut flat surface on upstream side
6b: cut flat surface on downstream side
7: inclined curved surface of blade dovetail
7c: maximum width part
8: wheel
9: cut curved concave surface on upstream side
9b: cut curved concave surface on downstream side
10: cut curved convex surface on upstream side
10b: cut curved convex surface on downstream side
11: inclined surface, which is flat surface, of blade dovetail
11c: maximum width part
12: cut concave surface consisting of a plurality of flat surfaces on upstream side
12b: cut concave surface consisting of a plurality of flat surfaces on downstream side
13: cut convex surface consisting of a plurality of flat surfaces on upstream side
13b: cut convex surface consisting of a plurality of flat surfaces on downstream side
14: wheel dovetail
15: cut spherical concave surface on upstream side
15b: cut spherical concave surface on downstream side
16: cut spherical convex surface on upstream side
16b: cut spherical convex surface on downstream side
18: stator blade
19: casing

## Claims

1. An axial flow compressor (1) comprising: a rotor blade (4) and a stator blade (18) to intake air from an atmosphere and compress the air; a wheel (8) to secure the rotor blade (4); a casing (19) to secure the stator blade (18); wherein a wheel dovetail (14) which is machined on an outer circumferential surface of the wheel (8) to have a certain angle with respect to a rotational axis of the axial flow compressor (1); and a rotor blade dovetail (5) which is machined on an inner circumferential side of the rotor blade (4) to secure by being fitted to the wheel dovetail (14), **characterized in that**:
a cut surface (6, 9, 10, 12, 13, 15, 16, 6b, 9b, 10b, 12b, 13b,15b,16b) is formed on at least one of an upstream side and a downstream side of the rotor blade dovetail (5) by cutting a part of the rotor blade dovetail (5) in a surface form.

2. The axial flow compressor according to claim 1,
wherein the cut surface by cutting a part of the rotor blade dovetail (5) in a surface form, which is formed on at least one of the upstream side and the downstream side of the rotor blade dovetail (5), is formed in a planar shape (6, 6b).

3. The axial flow compressor according to claim 1,
wherein the cut surface by cutting a part of the rotor blade dovetail (5) in a surface form, which is formed on at least one of the upstream side and the downstream side of the rotor blade dovetail (5), is a spherical concave surface (15, 15b).

4. The axial flow compressor according to claim 1,
wherein the cut surface by cutting a part of the rotor blade dovetail (5) in a surface form, which is formed on at least one of the upstream side and the downstream side of the rotor blade dovetail (5), is a spherical convex surface (16, 16b).

5. The axial flow compressor according to claim 1,
wherein the cut surface by cutting a part of the rotor blade dovetail (5) in a surface form, which is formed on at least one of the upstream side and the downstream side of the rotor blade dovetail (5), is a curved concave surface (9, 9b).

6. The axial flow compressor according to claim 1,
wherein the cut surface by cutting a part of the rotor blade dovetail (5) in a surface form, which is formed on at least one of the upstream side and the downstream side of the rotor blade dovetail (5), is a curved convex surface (10, 10b).

7. The axial flow compressor according to claim 1,
wherein the cut surface by cutting a part of the rotor blade dovetail (5) in a surface form, which is formed on at least one of the upstream side and the downstream side of the rotor blade dovetail (5), is a concave surface (12, 12b) consisting of a plurality of flat surfaces.

8. The axial flow compressor according to claim 1,
wherein the cut surface by cutting a part of the rotor blade dovetail (5) in a surface form, which is formed on at least one of the upstream side and the downstream side of the rotor blade dovetail (5), is a convex surface (13, 13b) consisting of a plurality of flat surfaces.

9. The axial flow compressor according to any one of claims 1 to 8, wherein the cut surface by cutting a part of the rotor blade dovetail (5) in a surface form, which is formed on the rotor blade dovetail (5), is disposed on an inclined surface (11) of the rotor blade dovetail (5), which is formed with a curbed surface.

10. The axial flow compressor according to any one of claims 1 to 8, wherein the cut surface by cutting a part of the rotor blade dovetail (5) in a surface form, which is formed on the rotor blade dovetail (5), is disposed on an inclined surface (7) of the rotor blade dovetail (5), which is formed with a flat surface.

11. The axial flow compressor according to any one of claims 1 to 10, wherein the cut surface by cutting a part of the rotor blade dovetail (5) in a surface form, which is formed on at least one of the upstream side and the downstream side of the rotor blade dovetail (5), is formed in a range of the rotor blade dovetail (5), of which the range is corresponding to a range in the wheel dovetail (14), in which stress exerted from the rotor blade (5) to the wheel dovetail (14) is at a certain level or higher.

12. A gas turbine comprising:
an axial flow compressor (1) according to any one of claims 1 to 11, which is used to intake air from the atmosphere and compress the air;
a combustor (2) to mix the compressed air supplied from the axial flow compressor with a fuel, and burn a mixture of the compressed air with the fuel to generate a high-temperature combustion gas; and
a turbine (3) which is driven by the high-temperature combustion gas generated in the combustor (2) to generate a rotational power.
